# FASCICULE DE BREVET EUROPEEN

(11) **EP 1 068 967 B1**
(45) Date de publication et mention de la délivrance du brevet: **06.12.2006**
(21) Numéro de dépôt: 00114835.2
(22) Date de dépôt: 11.07.2000
(51) Int. Cl.: B60H 1/00, F28D 1/04

(54) **Installation de chauffage-climatisation pour véhicule automobile**
Heiz- Klimaanlage für Kraftfahrzeuge
Heating-air conditioning device for a motor vehicle

(30) Priorité: 12.07.1999 FR 9908996
(43) Date de publication de la demande: 17.01.2001
(73) Titulaire: Valeo Systèmes Thermiques, 78321 Le Mesnil St Denis Cedex (FR)
(72) Inventeur: Gilles, Elliot, 91080 Courcouronnes (FR); Mounir, Ben Fredj, 78180 Montigny le Bretonneux (FR)

(56) Documents cités:
- EP-A- 0 888 912
- FR-A- 2 761 405
- US-A- 5 129 144
- US-A- 5 898 995

## Description

La présente invention a pour objet une installation de chauffage-climatisation pour véhicule automobile, comprenant d'une part, une boucle thermique qui comporte un compresseur frigorifique, un condenseur, un détendeur, et un évaporateur, et d'autre part, un élément de chauffage.

Dans les installations connues, il est connu d'utiliser un échangeur fluide frigorigène-air à l'intérieur de l'appareil de chauffage et de climatisation pour chauffer l'habitacle par la condensation de gaz chaud sortis d'un compresseur, par exemple en mettant en oeuvre une pompe à chaleur. Ceci implique la mise en oeuvre d'un échangeur externe pour le fonctionnement de la climatisation. En effet, le rejet des calories vers le milieu ambiant se fait toujours à l'aide d'un échangeur fluide frigorigène-air qui se trouve à l'extérieur de l'habitacle, ou en passant par un fluide intermédiaire comme l'eau. Dans ce dernier cas, une première boucle permet de prélever des calories dans un échangeur fluide frigorigène-eau et par la suite, une deuxième boucle permet le rejet de ces mêmes calories vers le milieu extérieur au moyen d'un échangeur eau-air.

Il est connu des installations utilisant un échangeur fluide frigorigène-air additionnel, de type sous-condenseur, à l'intérieur de l'appareil de chauffage afin de définir un dispositif de chauffage en complément d'un radiateur de chauffage. Une telle installation est décrite dans la demande de brevet EP-A-0888912.

Il est également connu d'utiliser un échangeur fluide frigorigène-eau comme condenseur tel que décrit dans la Demande de Brevet français n° FR 2 761 405 déposée le 27 Mars 1997 par la Demanderesse. Cette réalisation, qui donne une flexibilité d'emplacement de cet échangeur, nécessite de disposer d'une eau sur-refroidie ayant une température voisine de 55°C pour pouvoir condenser le fluide réfrigérant correctement à des niveaux de pression et de consommation d'énergie acceptable. Dans ces réalisations, l'échangeur est placé en dehors de l'habitacle et bien entendu de l'appareil de climatisation.

En outre, toutes les solutions décrites ci-dessus présentent l'inconvénient de disposer d'un élément de chauffage (radiateur de chauffage) qui ne fonctionne que par temps froid ou pour déshumidifier, et un condenseur qui ne fonctionne que par temps chaud ou pour déshumidifier.

L'idée de base de la présente invention est de regrouper l'élément de chauffage et le condenseur en un seul élément qui fonctionnera dans tous les modes.

Dans ce but, l'invention concerne une installation de chauffage-climatisation pour véhicule automobile, comprenant d'une part, une boucle thermique dans laquelle circule un fluide frigorigène et qui comporte un compresseur frigorifique, un refroidisseur de gaz, notamment un condenseur, un détendeur, et un évaporateur, et d'autre part, un élément de chauffage, caractérisé en ce que le refroidisseur de gaz et l'élément de chauffage sont regroupés en un seul échangeur comportant un module principal formant un échangeur principal air-fluide caloporteur-fluide frigorigène.

Le fluide caloporteur peut être de l'eau chaude, par exemple de l'eau de refroidissement du moteur, ou bien encore une eau sous-refroidie ou bien encore une eau déminéralisée d'un circuit d'une pile à combustible.

L'invention permet en particulier un rapprochement géographique du refroidisseur de gaz, notamment un condenseur et de l'évaporateur, ce qui est intéressant en terme de coût de canalisation. En outre, l'invention permet de diminuer le nombre de connexions de traversée du tablier ou de regrouper toutes ces connexions qui sont sources de fuites éventuelles du fluide réfrigérant.

Ledit échangeur principal présente avantageusement :
- au moins une surface d'échange entre l'air et du fluide caloporteur circulant à travers l'échangeur principal et/ou au moins une surface d'échange entre l'air et le fluide frigorigène circulant à travers l'échangeur principal, et
- au moins une surface d'échange entre du fluide caloporteur et du fluide frigorigène de la boucle thermique circulant à travers l'échangeur principal.

L'échangeur principal peut être composé d'un empilement de modules dont chacun comporte :
- un élément d'échange entre du fluide caloporteur et du fluide frigorigène de la boucle thermique, ayant au moins une surface en contact thermique avec un élément d'échange avec l'air ; et
- ledit élément d'échange avec l'air.

Selon une première variante préférée, ledit élément d'échange entre du fluide caloporteur et du liquide frigorigène présente successivement :
- un premier élément de circulation du fluide caloporteur ;
- un élément de circulation de fluide frigorigène ayant une première surface en contact thermique avec une première surface du premier élément de circulation de fluide caloporteur, et une deuxième surface en contact avec une première surface d'un deuxième élément de circulation de fluide caloporteur, et
- ledit deuxième élément de circulation de fluide caloporteur,
et en ce que ledit élément d'échange avec l'air présente une première surface d'échange avec une deuxième surface du deuxième élément de circulation de fluide caloporteur et une deuxième surface d'échange avec une deuxième surface du premier élément de circulation de fluide caloporteur d'un module adjacent.

Ledit élément d'échange entre du fluide caloporteur et du fluide frigorigène peut présenter successivement : un troisième élément de circulation de fluide caloporteur ayant une première surface en contact thermique avec un deuxième élément de circulation de fluide frigorigène de la boucle thermique ; et ledit deuxième élément de circulation de fluide frigorigène. De la sorte, l'échangeur principal présente des surfaces d'échange entre l'air et le fluide caloporteur, entre l'air et le fluide frigorigène et entre le fluide caloporteur et le fluide frigorigène.

Ledit échangeur principal peut comporter un collecteur du fluide caloporteur et un collecteur de fluide frigorigène de la boucle thermique disposés à des extrémités opposées de l'échangeur.

L'élément d'échange entre du fluide caloporteur et du fluide frigorigène de la boucle thermique peut présenter au moins un élément de circuit de fluide caloporteur pour faire circuler du fluide caloporteur selon un trajet d'aller-retour à partir de et vers le collecteur de fluide caloporteur et au moins un élément de circuit de fluide frigorigène pour faire circuler le fluide frigorigène de la boucle thermique, de préférence au moins en partie à contre-courant du fluide caloporteur, selon un trajet d'aller-retour à partir de et vers le collecteur de fluide frigorigène.

Le collecteur de fluide frigorigène peut également présenter un élément volumique formant une bouteille de fluide frigorigène pour la boucle thermique. Cette bouteille peut être en métal extrudé et elle peut en particulier être co-extrudée avec le collecteur de fluide frigorifique.

Selon une variante préférée, ledit échangeur comporte un module auxiliaire formant un échangeur auxiliaire du fluide caloporteur-fluide frigorigène qui est parcouru par le fluide frigorigène de la boucle principal et par le fluide caloporteur, par exemple, l'eau de refroidissement du moteur, et qui est destiné à servir d'échangeur de sous-refroidissement du fluide frigorigène de la boucle principale et/ou d'évaporateur pour une pompe à chaleur.

Ledit module auxiliaire peut comporter un empilement de modules d'échange fluide caloporteur-fluide frigorigène.

La boucle thermique peut présenter un premier circuit d'aiguillage pour former, en mode chauffage, une pompe à chaleur dont le condenseur est ledit échangeur principal et dont l'évaporateur est ledit échangeur auxiliaire.

Selon une autre variante, la boucle thermique présente un évaporateur additionnel pour un fonctionnement en mode chauffage, et un deuxième circuit d'aiguillage pour former en mode chauffage, une pompe à chaleur dont le condenseur est ledit échangeur principal et dont l'évaporateur est un évaporateur additionnel.

La boucle thermique peut présenter un troisième circuit d'aiguillage pour former en un mode de chauffage thermique, une boucle de chauffage et incluant ledit compresseur et l'échangeur principal et éventuellement l'échangeur auxiliaire, la sortie de fluide réfrigérant de l'échangeur principal étant couplée à l'entrée du compresseur, soit directement, soit à travers un détendeur. Ce détendeur peut être disposé en aval de l'échangeur principal, ce qui améliore les échanges thermiques, car le fluide frigorigène à l'état gazeux est plus chaud.

La boucle de chauffage peut présenter un détendeur disposé avant ou après l'échangeur principal, ce qui permet de travailler avec un fluide à plus basse densité, ce qui augmente le rendement et à plus faible vitesse, et donc à plus faible bruit. En mode chauffage par le fluide réfrigérant, la circulation de fluide caloporteur (notamment de l'eau) peut être autorisée ou interdite en fonction des écarts de température entre les deux fluides et du rendement global du système.

La boucle thermique peut comporter un dispositif d'alimentation pour alimenter l'échangeur principal, soit à partir d'eau de refroidissement, par exemple du moteur d'une pile à combustible ou d'un système de batterie, soit à partir d'eau sous-refroidie.

L'installation peut alors présenter :
- un mode climatisation dans lequel l'échangeur principal est parcouru par du fluide frigorigène et de l'eau sous-refroidie
- un mode chauffage dans lequel l'échangeur principal est parcouru par l'eau de refroidissement du moteur du véhicule.

L'installation peut présenter un volet de mixage qui, dans le mode climatisation, est dans une position de fermeture dans laquelle l'échangeur principal est isolé du flux d'air.

L'installation peut alors présenter également un mode désembuage dans lequel le mode climatisation est activé, et dans lequel le volet de mixage est dans une position d'ouverture au moins partielle, de sorte que l'échangeur principal et traversé par au moins une partie du flux d'air.

L'installation peut présenter un module pré-assemblé comportant ledit échangeur, ledit évaporateur, au moins un conduit d'air, ainsi que des moyens de distribution et/ou de mixage d'air.

Le module pré-assemblé peut comporter ledit compresseur frigorifique et/ou le détendeur, et/ou une pompe électrique et/ou une bouteille de fluide réfrigérant.

Le module pré-assemblé peut également comporter un élément de structure du véhicule et/ou une colonne de direction et/ou un sac gonflable et/ou un pédalier et/ou un moteur des organes d'entraînement des essuie-glaces du véhicule, et/ou un séparateur d'eau pour une entrée d'air dans l'habitacle, et/ou au moins un boîtier de filtre de purificateur d'air et/ou au moins un élément d'affichage.

Le module pré-assemblé peut présenter ladite boucle thermique qui est assemblée notamment par soudure ou brasure, de manière à être hermétique.

Le module pré-assemblé peut comporter une partie de la structure du véhicule, par exemple une partie du tablier et/ou la traverse inférieure de baie.

D'autres caractéristiques et avantages de l'invention apparaîtront mieux à la lecture de la description qui va suivre, donnée à titre d'exemple non limitatif, en liaison avec les dessins dans lesquels :
- les figures 1a à 1d illustrent un mode de réalisation préféré de l'échangeur selon l'invention, la figure la étant une représentation schématique de l'échangeur, la figure 1b étant une vue en perspective d'un élément d'échange entre de l'eau et du liquide frigorigène, les figures 1c et 1d étant des coupes partielles de la figure 1b ;
- la figure 2a illustre une autre variante d'un échangeur selon l'invention, la figure 2b étant une coupe transversale d'un élément d'échange entre de l'eau et du liquide frigorigène de la figure 2a ;
- la figure 3a représente une boucle thermique mettant en oeuvre l'invention, et dont la figure 3b représente un exemple d'implantation dans un véhicule ;
- les figures 4 et 5 représentent deux boucles thermique selon l'invention mettant en oeuvre un chauffage additionnel ;
- la figure 6a représente en perspective un échangeur selon l'invention qui comporte un module principal formant échangeur principal, ainsi qu'un module auxiliaire formant échangeur auxiliaire ;
- la figure 6b représente un collecteur de fluide frigorigène correspondant à la figure 6a, les figures 6c et 6d illustrent une variante préférée de ce collecteur, qui intègre une bouteille une bouteille de fluide frigorigène ;
- la figure 7a représente une variante de l'échangeur de la figure 6a et la figure 7d représente le collecteur de fluide frigorigène de l'échangeur de la figure 7a.

L'invention s'applique plus particulièrement à des appareils de chauffage-climatisation qui présentent un volet de mixage sur l'air.

L'idée de base de la présente invention est donc d'utiliser un échangeur fluide caloporteur -air-fluide réfrigérant qui remplit respectivement les rôles de refroidisseur de gaz ou de radiateur en fonction des modes de fonctionnement choisis. Dans le cas d'une boucle thermique « classique », le fluide réfrigérant gazeux est condensé dans le refroidisseur de gaz qui constitue un condenseur. Dans le cas d'une boucle thermique fonctionnant en mode dit « supercritique », le fluide réfrigérant gazeux, par exemple du CO₂, est simplement refroidi dans le refroidisseur de gaz.

La suite de la description concerne, à titre non limitatif, le cas d'une boucle thermique classique, qui met en oeuvre un condenseur et dans laquelle le fluide caloporteur est de l'eau.

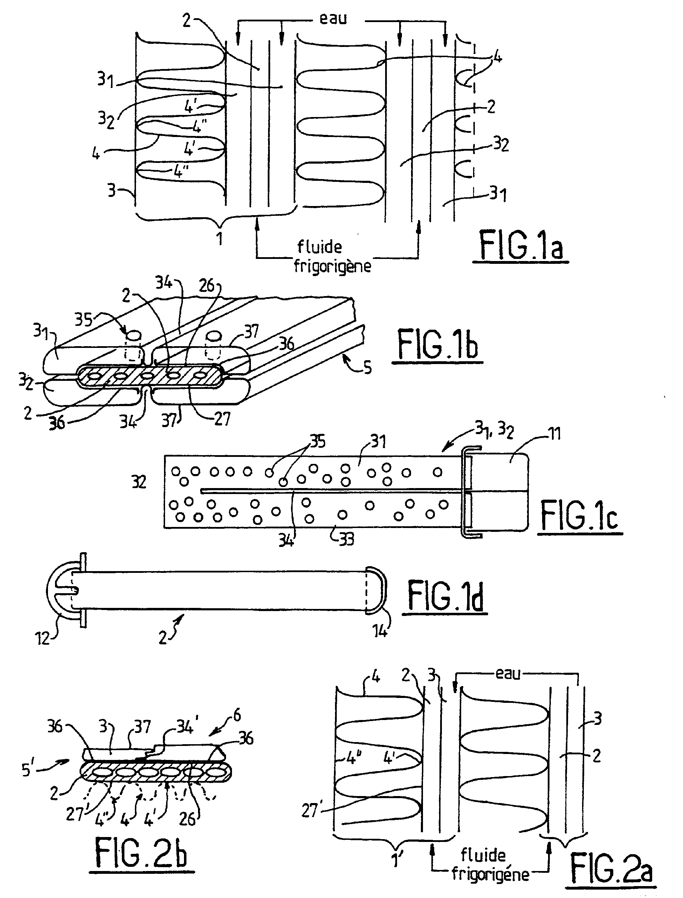

La première réalisation décrite aux figures 1a à la permet de favoriser au mieux l'échange entre des tubes d'eau et des tubes de fluide frigorigène. Comme le montre la figure 1a, un élément de circulation d'eau référencé 2 est disposé entre deux éléments de circulation de fluide frigorigène référencés 3₁ et 3₂, avec chacun desquels présente une surface d'échange thermique 26 et 27. L'échangeur est constitué d'un empilement de modules 1 comprenant successivement un élément 3₁, un élément 2, un élément 3₂, et un élément 4 d'échange avec l'air qui est formé en général d'une feuille mince ondulée. Les modules 1 sont superposés de sorte que les éléments 4 ont une surface d'échange d'un côté 4' avec un élément 3₂ d'un module 1, et de l'autre 4'' avec un élément 3₁ d'un module 1 adjacent. Cette structure favorise particulièrement les échanges entre l'eau et le fluide frigorigène et ce d'autant plus que, comme le montre la figure 1b, les éléments 3₁ et 3₂ peuvent être assemblés de manière à entourer l'élément 2 qui est traversé par le fluide frigorigène. En outre, et pour un meilleur échange thermique, la circulation de l'eau, et du fluide frigorigène s'effectue selon un trajet d'aller et retour en U à partir d'un collecteur d'eau 11 disposé à une extrémité de l'échangeur, et d'un collecteur 12 de fluide frigorigène disposé à l'autre extrémité de celui-ci. En outre, les trajets en U respectifs sont de préférence disposés de manière que, les fluides (eau et fluide frigorigène) circulent autant que possible à contre-courant.

Il entre également dans le cadre de la présente invention de favoriser l'échange air-fluide frigorigène. Dans cette configuration, l'échangeur principal est composé d'un empilement de modules présentant des surfaces d'échange d'une part, entre l'air et le fluide frigorigène, et d'autre part, entre du fluide caloporteur et du fluide frigorigène.

La figure 2a illustre une autre variante de l'échangeur selon l'invention, selon laquelle celui-ci est réalisé par un empilement de modules 1' dont chacun comporte un élément de circulation d'eau référencé 3, un élément de circulation de fluide frigorigène référencé 2, et un élément d'échange avec l'air référencé 4. Dans ce mode de réalisation, l'élément 2 de circulation de fluide frigorigène présente une surface d'échange 27' en contact thermique avec une surface d'échange 4' de l'élément 4 d'échange avec l'air, dont l'autre surface d'échange 4" est en contact thermique avec la surface 37 de l'élément 3 d'un module 1' adjacent.

Les éléments de circulation d'eau 3, 3₁ et 3₂ présentent des canaux de circulation formant un U délimité par exemple par une rainure centrale 34 dans le cas de la figure 1c ou bien par des formes complémentaires 34' dans le cas de la figure 2b. En outre, des éléments de turbulation 35 peuvent être disposés de manière à rendre le flux d'eau turbulent. Comme le montre la figure 1c, l'eau parcourt tout d'abord une trajectoire aller rectiligne 31 puis tourne en 32 et revient vers le collecteur 11 par le trajet rectiligne de retour 33. Les éléments 3, 3₁ et 3₂ présentent des surfaces d'échange 36 avec une surface 26 ou 27 d'un élément 2 et des surfaces d'échange 37 avec des surfaces d'échange 4', 4" d'un élément 4 d'échange avec l'air.

Dans le cas de la figure 1b, l'élément 2 présente une surface d'échange 26 avec l'élément 3₁, et une surface d'échange 27 avec l'élément 3₂. Dans le cas le figure 2b, l'élément 2 présente une surface d'échange 26 avec l'élément 3, et une surface d'échange 27' avec l'élément 4. Dans l'un et l'autre cas, il est avantageux que l'eau soit entraînée par une pompe électrique de circulation.

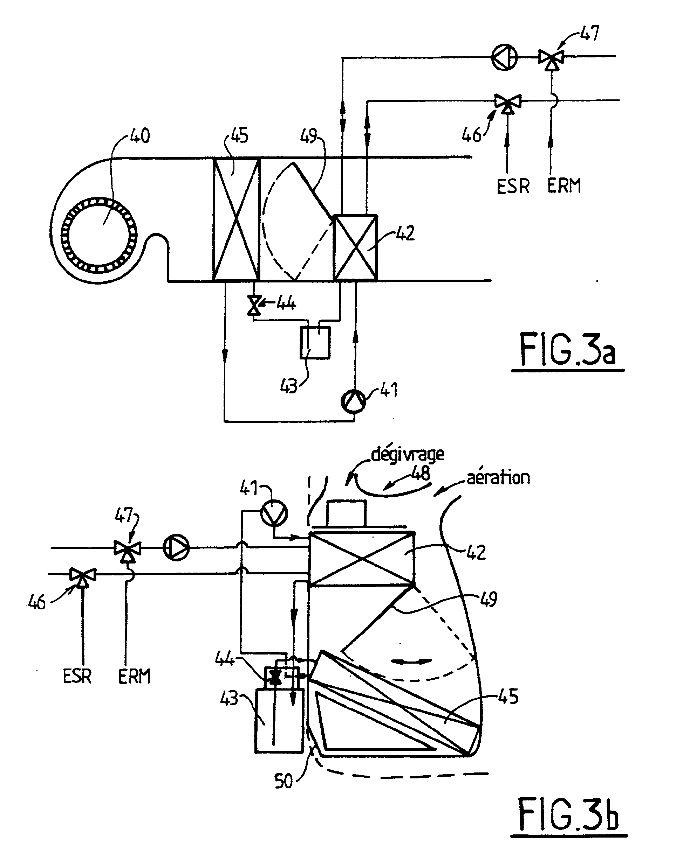

Comme le montrent les figures 3a et 3b, un dispositif selon l'invention comporte un pulseur 40, et une boucle thermique composée d'un compresseur 41, de préférence un compresseur électrique, un échangeur 42 qui est un échangeur air-eau-fluide réfrigérant tel que décrit par exemple aux figures précédentes, une bouteille 43 de fluide réfrigérant, un détendeur 44 et un évaporateur 45 dont la sortie alimente l'entrée du compresseur 41 pour fermer la boucle.

L'installation comporte également un volet de mixage 49 qui permet ou non, suivant la position à laquelle il est placé, d'isoler l'échangeur 42 du flux d'air généré par le pulseur et qui traverse l'évaporateur 45 (notamment pour réaliser une fonction de désambuage).

En outre, l'échangeur 42 est alimenté par deux vannes trois voies 46 et 47 qui permettent de faire traverser son circuit d'eau, soit par de l'eau sous-refroidie ESR, soit par de l'eau de refroidissement ERM, par exemple de l'eau de refroidissement du moteur thermique du véhicule.

La figure 3b montre l'implantation de l'installation dans laquelle l'échangeur 42 et l'évaporateur 45, le pulseur 40 et le volet 49 sont disposés à l'intérieur de l'habitacle pour alimenter des sorties par exemple de dégivrage ou d'aération, alors que, dans le compartiment moteur et de l'autre côté du tablier 50, sont disposés le compresseur 41, la bouteille 43 et le détendeur 44, ainsi que les vannes trois voies 46 et 47.

Dans ces conditions, l'installation de chauffage-climatisation présente d'une part, dans l'habitacle, un appareil de chauffage-climatisation associant des entrées et des sorties d'air, un système de volets de commande incluant le volet 49, le pulseur 40, l'évaporateur 45 et l'échangeur 42, et d'autre part, dans le compartiment moteur, les éléments précités référencés 41, 43, 44, 46 et 47.

On voit que cette implantation, même si elle implique un certain nombre de connexions à travers le tablier, permet des liaisons courtes puisque l'ensemble de ces composants peut être disposé à proximité du tablier 50 et de part et d'autre de celui-ci.

Le fonctionnement de cette installation est la suivante :

En mode climatisation, le volet de mixage 49 est fermé (position représentée à la figure 3b) et l'échangeur 42 est isolé du flux d'air. L'échangeur 42 est parcouru à la fois par le réfrigérant chaud qui sort du compresseur 41 et par l'eau sous-refroidie ESR dirigée par la vanne 46. Les calories absorbées par l'évaporateur 45 sont de la sorte rejetées à l'extérieur grâce à l'eau sous refroidie ESR qui parcourt l'échangeur 42.

En mode chauffage, la climatisation est à l'arrêt et l'échangeur 42 fonctionne comme un radiateur qui est parcouru par l'eau de refroidissement ERM du moteur thermique du véhicule.

En mode désambuage, la climatisation est mise en marche et le volet de mixage 49 est dans la position ouverte représentée à la figure 3a. Si l'on souhaite que l'opération de désambuage s'accompagne par un refroidissement, le volet 49 est partiellement ouvert. Si l'opération s'accompagne par un réchauffement souhaité, on peut faire circuler à travers l'échangeur 42 de l'eau chaude, par exemple l'eau de refroidissement du moteur ERM au lieu de l'eau sous-refroidie ESR, ce qui dégrade quelque peu le fonctionnement de la climatisation et permet de stabiliser le système qui est en général instable à faible charge thermique.

La bouteille 43 peut être placée aussi bien dans l'habitacle que, comme représenté, dans le compartiment moteur. Elle peut également porter le détendeur 44 (comme représenté à la figure 3b) de telle sorte que l'ensemble ne forme qu'un seul module.

Le compresseur 41 est de préférence un compresseur électrique, ce qui permet de dissocier l'entraînement du compresseur du régime du moteur thermique. Il devient de la sorte possible de disposer le compresseur près du tablier 50 dans le compartiment moteur, voire même dans l'habitacle.

Il est ainsi possible de réaliser une boucle très compacte dont la longueur des turbulures est très courte et qui est physiquement très proche de l'appareil de chauffage et de climatisation proprement dit qui comporte l'ensemble des conduits d'air, des volets, etc. Il devient alors possible de réaliser la boucle entière en un seul module qui peut faire partie d'un module « cockpit » intégrant au moins l'appareil de chauffage et de climatisation. Ce module peut particulièrement intégrer des échangeurs de chaleur, des conduits d'air et des moyens de distribution et de mixage qui font d'un partie d'un appareil de climatisation classique, ainsi que des logements propres à recevoir un compresseur frigorifique et/ou une pompe électrique et/ou une bouteille de fluide réfrigérant et/ou un détendeur et/ou un élément de structure et/ou une colonne de direction et/ou un ou plusieurs sacs gonflables et/ou un pédalier. Ce module peut constituer un sous-ensemble qui est pré-assemblé en dehors de la chaîne de montage principal de l'automobile et qui se monte directement comme un tout. De la sorte, cette boucle peut être rendue complètement hermétique, notamment grâce à des soudures. Ceci permet de réaliser un système ne présentant pas de fuites du réfrigérant.

Ce sous-ensemble peut également comporter le moteur et/ou les organes d'entraînement des essuie-glaces, ainsi que le séparateur d'eau pour l'entrée d'air dans l'habitacle et/ou au moins un boîtier apte à recevoir un filtre de purification d'air.

Le module peut également comporter l'électronique de puissance qui gère le compresseur et/ou la pompe électrique et/ou un alterno-démarreur. Ces composants électroniques peuvent être regroupés en un seul module refroidi par le même moyen, notamment l'eau sous-refroidie à 55°C.

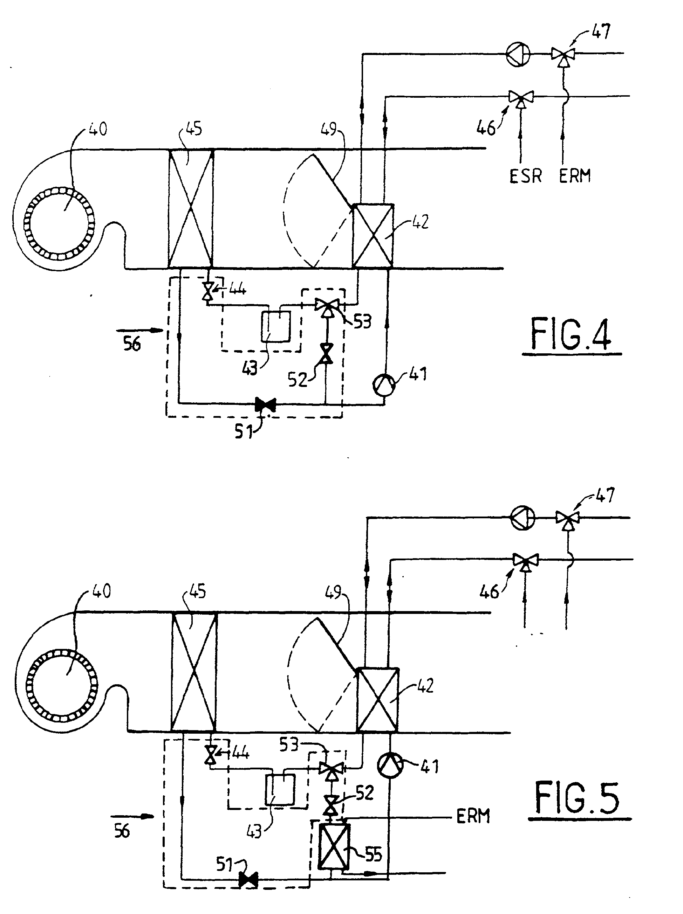

Les figures 4 et 5 représentent la boucle des figures 3 et 3b, à laquelle est adjointe une fonction de chauffage additionnel, soit sous la forme d'une boucle thermique fermée (figure 4) soit sous la forme plus élaborée d'une pompe à chaleur (figure 5). Dans l'un et l'autre cas, ceci implique la mise en oeuvre d'une vanne anti-retour 51 et d'une vanne trois voies 53 disposée entre l'échangeur 42 et la bouteille 43 d'une part, et d'une dérivation pourvue d'une vanne 52. En ce qui concerne la figure 4 (boucle fermée), un détendeur 4 peut être disposé en amont ou de préférence en aval de l'échangeur principal 42 (ou 7). Dans ce dernier cas, on obtient un meilleur échange thermique au niveau de l'échangeur 42, car les gaz sont plus chauds Le fonctionnement en pompe à chaleur implique la mise en oeuvre d'un évaporateur additionnel 55 disposé dans la branche de dérivation précitée en série avec la vanne 52, comme représenté à la figure 5. Ces deux modes de réalisation tirent partie de l'existence de l'échangeur 42 qui par sa conception résiste aux hautes pressions et est disposé à l'intérieur de l'habitacle.

En effet, un système de pompe à chaleur classique ne peut pas utiliser un évaporateur conventionnel car ce dernier n'est pas conçu pour tenir a des pressions aussi élevées que celles qui s'établissent en mode chauffage.

C'est pour cette raison que, conventionnellement, les pompes à chaleurs sont construites avec des évaporateurs plus robustes et donc plus coûteux ou bien avec un deuxième échangeur dans l'habitacle et qui sert uniquement en mode chauffage et qui est construit avec les mêmes technologies qu'un condenseur. Etant donné qu'une pompe à chaleur nécessite de disposer d'un échangeur qui puise de l'énergie dans une source chaude, une réalisation préférentielle de cet échangeur est l'utilisation, comme représenté à la figure 5, d'un échangeur fluide frigorigène-eau 55 qui sert comme évaporateur en mode chauffage de la pompe à et qui est parcouru par une eau de refroidissement, par exemple l'eau de refroidissement du moteur ERM, ce qui permet d'augmenter la quantité de chaleur disponible dans l'habitacle en puisant des calories dans l'eau de refroidissement du moteur.

Comme on le verra dans la suite de la description, cet échangeur peut être intégré à l'échangeur 42.

En mode climatisation, la vanne trois voies 53 dirige le fluide réfrigérant sortant du condenseur 42 vers la bouteille 43 du tendeur 44, l'évaporateur 45 et le retour vers le compresseur 41. En mode chauffage, la vanne trois voies 53 dirige le fluide réfrigérant sortant de l'échangeur 42 vers la dérivation 52 et donc dans le cas de la figure 5 à travers l'évaporateur additionnel 55.

Le fonctionnement du circuit de la figure 4 est très simple. Le compresseur 41 alimente l'échangeur 42 et le fluide en sortie de celui-ci est réinjecté à l'entrée du compresseur 41. Il s'agit d'un chauffage thermique dans lequel l'énergie fournie par l'échangeur 42 est égale (aux pertes près) au travail mécanique de compresseur 41.

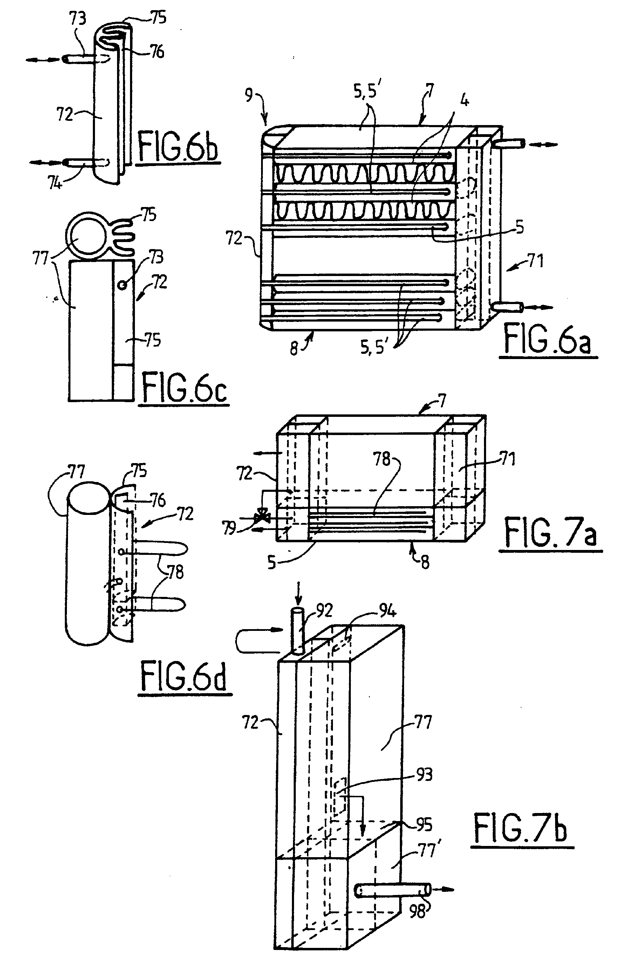

Comme le montre la figure 6a, l'échangeur 9 présente un échangeur principal 7, composé d'un empilement d'éléments 5 ou 5' d'échange entre de l'eau et du fluide frigorigène, et d'éléments 4 d'échange avec l'air. Cet échangeur principal est utilisable comme un échangeur 42 dans les exemples décrits. Il comporte préférentiellement un échangeur additionnel 8 qui est composé d'un empilement d'éléments 5 et 5' par exemple, sans interposition d'éléments 4. Cet échangeur auxiliaire 8 est utilisable en particulier en tant qu'évaporateur 55 pour un chauffage par pompe à chaleur comme représenté à la figure 5. Il est également utilisable en tant qu'échangeur de sous-refroidissement du fluide réfrigérant de la boucle principale. Ceci permet d'obtenir un fluide réfrigérant dit sous-refroidi à une température inférieure d'environ 5°C à 10°C à sa température de condensation. Ceci permet d'optimiser les performances du condenseur placé en aval de l'échangeur additionnel 8. Le collecteur de fluide frigorigène 72 présente une partie tubulaire pourvue d'une séparation 76 de manière à séparer le fluide qui par exemple arrive par une conduite d'amenée inférieure 74 et ressort par un conduit de sortie 73 (figures 6b et 6c). En outre, et comme représenté aux figures 6c et 6d, le collecteur 72 de fluide frigorigène est de préférence muni d'un réservoir cylindrique 77 qui forme une bouteille de fluide frigorigène. Cette bouteille est avantageusement en métal extrudé, cette extrusion pouvant s'effectuer en même temps que celle du collecteur, ou bien la bouteille extrudée est rapportée sur le collecteur par brasage. On notera qu'en raison de la compacité de l'installation due au raccourcissement des liaisons entre composants, ainsi qu'à la meilleure étanchéité, voire l'étanchéité totale qui est obtenue, le volume de cette bouteille peut être considérablement réduit par rapport à celui qui est nécessaire dans une installation classique.

La figure 7a montre une vanne d'aiguillage 79 qui est une vanne trois voies qui permet d'aiguiller l'arrivée du fluide frigorigène vers l'échangeur principal 7 et/ou l'échangeur auxiliaire 8.

La figure 7b montre plus en détail un mode de réalisation du collecteur de fluide frigorigène 72 auquel est accolée la bouteille 77 au cas où la sortie de fluide frigorigène s'effectue par la bouteille 77. Le fluide frigorigène entre en 92 par le haut du collecteur 72, et parcourt l'échangeur principal 7, et il entre ensuite dans la bouteille 77 par une ouverture 93 située en partie basse du collecteur 72. Une ouverture 94 dite de dégazage est placée en partie haute du collecteur 72 pour faciliter la séparation gaz-liquide dans le collecteur 72. Cette ouverture 94 débouche en partie haute de la bouteille 77. Le fluide frigorigène est prélevé en partie basse 95 de la bouteille 75 pour être sous-refroidi dans l'échangeur auxiliaire 8. Ensuite le fluide frigorigène sous-refroidi peut être dirigé par exemple vers le détendeur 44 et l'évaporateur 45, soit directement, soit, comme représenté, en repassant par un sous-compartiment 77' de la bouteille.

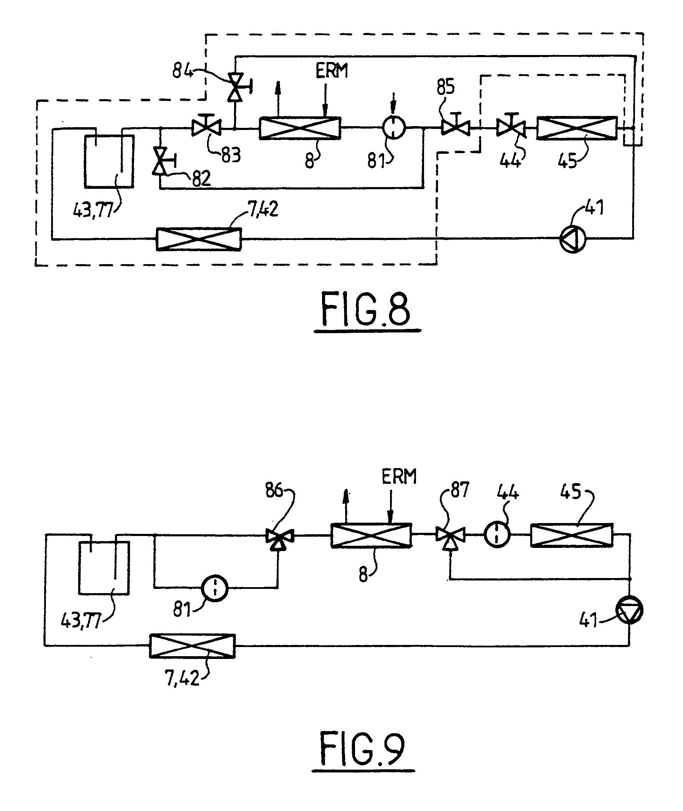

La figure 8 illustre l'utilisation de l'échangeur auxiliaire 8 notamment en tant qu'évaporateur eau-fluide frigorigène en mode pompe à chaleur. Dans ce mode de fonctionnement, le condenseur de la pompe à chaleur est constitué par l'échangeur principal 7, et l'échangeur additionnel 8 est alimenté par un détendeur 81. L'ensemble des connexions est déterminé par des vannes 82, 83, 84 et 85. En mode climatisation, l'échangeur principal 7 remplit la fonction du condenseur 42, les vannes 82 et 85 sont ouvertes et les vannes 83, 84 sont fermées. En mode pompe à chaleur, les vannes 83, 85 sont fermées et les vannes 82, 84 sont ouvertes. En mode sous-refroidissement, les vannes 82 et 84 sont fermées et les vannes 83 et 85 sont ouvertes. Le fluide frigorigène qui sort de la bouteille 43 (ou 77) est sous-refroidi dans l'échangeur auxiliaire 8 avant de traverser l'évaporateur 45 de la boucle de climatisation.

Un autre circuit qui met en oeuvre deux vannes 3 voies 86 et 87 est représenté à la figure 9. En mode climatisation avec sous-refroidissement du fluide réfrigérant, les vannes trois voies 86 et 87 sont passantes (en direct), c'est-à-dire que le fluide réfrigérant en sortie du condenseur 42 traverse la bouteille 43 (ou 77), puis l'échangeur auxiliaire 8, le détendeur 44 et enfin l'évaporateur 45 avant de retourner au compresseur 41. Dans ce mode, le fluide caloporteur qui traverse l'échangeur auxiliaire 8, est de préférence de l'eau sous-refroidie ESR, ce qui peut être également de l'eau de refroidissement du moteur ERM.

En mode de chauffage de l'habitacle par pompe à chaleur, la vanne 86 dérive le fluide réfrigérant à travers le détendeur 81. Le fluide frigorigène traverse ensuite l'échangeur auxiliaire 8 qui fait fonction d'évaporateur pour la pompe à chaleur, puis retourne à l'entrée du compresseur 41, la vanne 87 dérivant dans ce sens le fluide frigorigène.

L'échangeur auxiliaire 8 est traversé par un fluide caloporteur, par exemple, l'eau de refroidissement du moteur ERM, qui cède ses calories au fluide frigorigène.

L'installation de chauffage-climatisation selon l'invention peut être intégrée à un poste de conduite d'un véhicule automobile.

## Revendications

1. Installation de chauffage-climatisation pour véhicule automobile, comprenant d'une part, une boucle thermique qui comporte un compresseur frigorifique, un refroidisseur de gaz, notamment un condenseur, un détendeur, et un évaporateur, et d'autre part, un élément de chauffage, **caractérisée en ce que** le refroidisseur de gaz et l'élément de chauffage sont regroupés en un seul échangeur (42) installé à l'intérieur d'un appareil de chauffage-climatisation comportant un module principal formant un échangeur principal (7) air-fluide caloporteur-fluide frigorigène.

2. Installation selon la revendication 1, **caractérisée en ce que** ledit échangeur principal (7) présente :
au moins une surface d'échange (4', 4'', 37) entre l'air et du fluide caloporteur circulant à travers l'échangeur principal (7)
- au moins une surface d'échange (26, 27, 36) entre du fluide caloporteur et du fluide frigorigène de la boucle principale circulant à travers l'échangeur principal (7).

3. Installation selon la revendication 2, **caractérisée en ce que** ledit échangeur principal (7) est composé d'un empilement de modules (1, 1') comportant
- un élément d'échange (2, 3₁, 3₂) entre du fluide caloporteur et du fluide frigorigène, ayant au moins une surface (37) en contact thermique avec un élément d'échange (4) avec l'air ;
- ledit élément d'échange avec l'air (3, 3₁, 3₂).

4. Installation selon la revendication 3, **caractérisée en ce que** ledit élément d'échange (2, 3₁, 3₂) entre du fluide caloporteur et du fluide frigorigène présente successivement
- un premier élément (3₁) de circulation du fluide caloporteur ;
- un élément (2) de circulation de fluide frigorigène ayant une première surface (26) en contact thermique avec une première surface (36) du premier élément (3₁) de circulation de fluide caloporteur et une deuxième surface (27) en contact avec une première surface (36) d'un deuxième élément (3₂) de circulation de fluide caloporteur ;
ledit deuxième élément (3₂) de circulation de fluide caloporteur, et **en ce que** ledit élément (4) d'échange avec l'air présente une première surface (4') d'échange avec une deuxième surface (37) du deuxième élément (3₂) de circulation de fluide caloporteur et une deuxième surface d'échange (4'') avec une deuxième surface (37) du premier élément (3₁) de circulation de fluide caloporteur d'un module adjacent.

5. Installation selon la revendication 3, **caractérisée en ce que** lesdits modules (1') présentent également au moins une surface d'échange (27') entre de l'air et du liquide frigorigène circulant à travers l'échangeur principal (7).

6. Installation selon la revendication 5, **caractérisée en ce que** ledit élément d'échange (2, 3) entre du fluide caloporteur et du liquide frigorigène présente successivement :
un troisième élément (3) de circulation de fluide caloporteur ayant une première surface en contact thermique avec un deuxième élément (2) de circulation de fluide frigorigène
ledit deuxième élément (2) de circulation de fluide frigorigène.

7. Installation selon la revendication 1, **caractérisée en ce que** ledit échangeur principal présente :
au moins une surface d'échange entre l'air et du liquide frigorigène.

8. Installation selon une des revendications précédentes, **caractérisée en ce que** ledit échangeur principal (7) comporte un collecteur de fluide caloporteur (11) et un collecteur du liquide frigorigène (12) disposés à des extrémités opposées de l'échangeur principal (7).

9. Installation selon la revendication 8, **caractérisée en ce que** l'élément (2) d'échange entre du fluide caloporteur et du liquide frigorigène présente au moins un élément de circuit de fluide caloporteur (31, 32, 33, 34) pour faire circuler le fluide caloporteur selon un trajet d'aller-retour à partir de et vers le collecteur de fluide caloporteur (11) et au moins un élément de circuit de liquide frigorigène pour faire circuler le fluide frigorigène selon un trajet d'aller-retour à partir de et vers le collecteur de fluide frigorigène (12).

10. Installation selon la revendication 9, **caractérisée en ce que** la circulation du fluide frigorigène et du fluide caloporteur s'effectue au moins en partie à contre-courant.

11. Installation selon une des revendications 8 à 10, **caractérisée en ce que** le collecteur de liquide frigorigène (12) présente un élément volumique (77) formant une bouteille de liquide frigorigène pour la boucle thermique.

12. Installation selon la revendication 11, **caractérisée en ce que** ladite bouteille (77) est en métal extrudé.

13. Installation selon la revendication 12, **caractérisée en ce que** le collecteur de fluide frigorigène (12) et la bouteille (77) sont co-extrudés.

14. Installation selon une des revendications précédentes, **caractérisée en ce que** ledit échangeur comporte un module auxiliaire formant un échangeur auxiliaire (8) fluide caloporteur-fluide frigorigène qui est parcouru par le fluide frigorigène et par un fluide caloporteur de refroidissement (ERM, ESR) et qui est destiné à servir d'échangeur de sous-refroidissement du fluide frigorigène et/ou d'évaporateur pour une pompe à chaleur.

15. Installation selon la revendication 13, **caractérisée en ce que** ledit module auxiliaire comporte un empilement de modules d'échange (5, 5') fluide caloporteur-fluide frigorigène.

16. Installation selon une des revendications 14 ou 15, **caractérisée en ce que** la boucle thermique présente un premier circuit d'aiguillage pour former en mode chauffage, une pompe à chaleur dont le condenseur est ledit échangeur principal (7, 42) et dont l'évaporateur est ledit échangeur auxiliaire (8).

17. Installation selon une des revendications 1 à 13, **caractérisée en ce que** la boucle thermique présente un évaporateur additionnel (55) pour un fonctionnement en mode chauffage, et un deuxième circuit d'aiguillage pour former en mode chauffage, une pompe à chaleur dont le condenseur est ledit échangeur principal (7, 42) et dont l'évaporateur est un évaporateur additionnel (55).

18. Installation selon une des revendications précédentes, **caractérisée en ce que** la boucle thermique présente une troisième circuit d'aiguillage pour former en un mode de chauffage thermique, une boucle de chauffage incluant le compresseur (41) et l'échangeur principal (7, 42) dont la sortie de fluide réfrigérant est couplée à l'entrée du compresseur (41).

19. Installation selon la revendication 18, **caractérisée en ce qu'**elle comporte un détendeur disposé en aval de l'échangeur principal (7, 42).

20. Installation selon une des revendications précédentes, **caractérisée en ce que** la boucle thermique comporte un dispositif d'alimentation pour alimenter l'échangeur principal soit à partir d'eau de refroidissement (ERM), soit à partir d'eau sous-refroidie (ESR).

21. Installation selon la revendication 20, **caractérisée en ce qu'**elle présente :
un mode climatisation dans lequel l'échangeur principal est parcouru par du liquide frigorigène et de l'eau sous-refroidie (ESR),
un mode chauffage dans lequel l'échangeur principal est parcouru par une eau de refroidissement(ERM).

22. Installation selon la revendication 21, **caractérisée en ce qu'**elle présente un volet de mixage (49) qui, dans le mode climatisation, est dans une position de fermeture dans laquelle l'échangeur principal (7, 42) est isolé du flux d'air.

23. Installation selon la revendication 22, **caractérisée en ce qu'**elle présente un mode désembuage dans lequel le mode climatisation est activé, et dans lequel le volet de mixage (49) est dans une position d'ouverture au moins partielle, de sorte que l'échangeur principal (7, 42) est traversé par au moins une partie du flux d'air.

24. Installation selon une des revendications précédentes, **caractérisée en ce qu'**elle présente un module pré-assemblé comportant ledit échangeur principal (7, 42), ledit évaporateur (45), au moins un conduit d'air, ainsi que des moyens de distribution et/ou de mixage d'air.

25. Installation selon la revendication 24, **caractérisée en ce que** le module pré-assemblé comporte ledit compresseur frigorifique (41) et/ou le détendeur (44), et/ou une pompe électrique et/ou une bouteille de fluide réfrigérant (43, 77)

26. Installation selon la revendication 25, **caractérisée en ce que** le module pré-assemblé comporte un élément de structure du véhicule et/ou une colonne de direction et/ou un sac gonflable et/ou un pédalier.

27. Installation selon une des revendications 24 à 26, **caractérisée en ce que** le module pré-assemblé comporte un moteur et des organes d'entraînement des essuie-glaces du véhicule, et/ou un séparateur d'eau pour une entrée d'air dans l'habitacle et/ou au moins un boîtier de filtre de purificateur d'air et/ou au moins un élément d'affichage.

28. Installation selon une des revendications 24 à 26, **caractérisée en ce que** le module pré-assemblé présente ladite boucle thermique (41, 42, 43, 44, 45) et **en ce que** celle-ci est pré-assemblée de manière hermétique.

29. Véhicule automobile, **caractérisé en ce qu'**il comporte une installation selon une des revendications précédentes.

## Claims

1. Heating-air conditioning system for a motor vehicle, including on the one hand, a thermal loop comprising a refrigerating compressor, a gas cooler, particularly a condenser, an expansion valve, and an evaporator, and on the other hand, a heating element, **characterised in that** the gas cooler and the heating element are combined in a single exchanger (42) installed inside a heating-air conditioning apparatus comprising a main module forming a principal air-coolant-refrigerant exchanger (7).

2. System according to claim 1, **characterised in that** said principal exchanger (7) has:
- at least one exchange surface (4', 4", 37) between the air and coolant flowing through the principal exchanger (7)
- at least one exchange surface (26, 27, 36) between coolant and refrigerant of the principal loop circulating through the principal exchanger (7).

3. System according to claim 2, **characterised in that** said principal exchanger (7) is composed of a stack of modules (1, 1') comprising
- an element for exchange (2, 3₁, 3₂) between coolant and refrigerant, having at least one surface (37) in thermal contact with an element (4) for exchange with the air;
- said element for exchange with the air (3, 3₁, 3₂).

4. System according to claim 3, **characterised in that** said exchange element (2, 3₁, 3₂) between coolant and refrigerant has successively
- a first coolant circulation element (3₁);
- a refrigerant circulation element (2) having a first surface (26) in thermal contact with a first surface (36) of the first coolant circulation element (3₁) and a second surface (27) in contact with a first surface (36), of a second coolant circulation element (3₂);
said second coolant circulation element (3₂), and **in that** said element for exchange (4) with the air has a first surface (4') for exchange with a second surface (37) of the second coolant circulation element (3₂) and a second surface for exchange (4") with a second surface (37) of the first coolant circulation element (3₁) of an adjacent module.

5. System according to claim 3, **characterised in that** said modules (1') also have at least one surface for exchange (27') between air and refrigerant circulating through the principal exchanger (7).

6. System according to claim 5, **characterised in that** said exchange element (2, 3) between coolant and refrigerant has successively:
a third coolant circulation element (3) having a first surface in thermal contact with a second refrigerant circulation element (2); and
said second refrigerant circulation element (2).

7. System according to claim 1, **characterised in that** said principal exchanger has:
at least one exchange surface between the air and refrigerant.

8. System according to one of the previous claims, **characterised in that** said principal exchanger (7) comprises a coolant collector (11) and a refrigerant collector (12) placed at opposite ends of the principal exchanger (7).

9. System according to claim 8, **characterised in that** the element (2) for exchange between coolant and refrigerant has at least one coolant circuit element (31, 32, 33, 34) to make the coolant circulate along a to-and-fro trajectory from and to the coolant collector (11) and at least one refrigerant circuit element to make the refrigerant circulate along a to-and-fro trajectory from and to the refrigerant collector (12).

10. System according to claim 9, **characterised in that** the refrigerant and the coolant circulate at least partly in counterflow.

11. System according to one of claims 8 to 10, **characterised in that** the refrigerant collector (12) has a volume element (77) forming a bottle of refrigerant for the thermal loop.

12. System according to claim 11, **characterised in that** said bottle (77) is made of extruded metal.

13. System according to claim 12, **characterised in that** the refrigerant collector (12) and the bottle (77) are jointly extruded.

14. System according to one of the previous claims, **characterised in that** said exchanger comprises an auxiliary module forming an auxiliary coolant-refrigerant exchanger (8) which is passed through by the refrigerant and by a coolant (ERM, ESR) and which is intended to act as an exchanger for sub-cooling the refrigerant and/or as an evaporator for a heat pump.

15. System according to claim 13, **characterised in that** said auxiliary module comprises a stack of coolant-refrigerant exchange modules (5, 5').

16. System according to one of claims 14 or 15, **characterised in that** the thermal loop has a first switching circuit so as to form, in heating mode, a heat pump, the condenser of which is said principal exchanger (7, 42), and the evaporator of which is said auxiliary exchanger (8).

17. System according to one of claims 1 to 13, **characterised in that** the thermal loop has an additional evaporator (55) for an operation in heating mode, and a second switching circuit so as to form, in heating mode, a heat pump, the condenser of which is said principal exchanger (7, 42), and the evaporator of which is an additional evaporator (55).

18. System according to one of the previous claims, **characterised in that** the thermal loop has a third switching circuit so as to form, in thermal heating mode, a heating loop including the compressor (41) and the principal exchanger (7, 42), the refrigerant output of which is coupled to the input df the compressor (41).

19. System according to claim 18, **characterised in that** it comprises an expansion valve placed downstream from the principal exchanger (7, 42).

20. System according to one of the previous claims, **characterised in that** the thermal loop comprises a feeder to supply the principal exchanger, either from cooling water (ERM), or from sub-cooled water (ESR).

21. System according to claim 20, **characterised in that** it has:
an air-conditioning mode in which the principal exchanger is passed through by refrigerant liquid and sub-cooled water (ESR),
a heating mode in which the principal exchanger is passed through by cooling water (ERM).

22. System according to claim 21, **characterised in that** it has a mixing flap (49) which, in air-conditioning mode, is in a closed position in which the principal exchanger (7, 42) is isolated from the airflow.

23. System according to claim 22, **characterised in that** it has a demisting mode in which the air-conditioning mode is activated, and in which the mixing flap (49) is in an at least partially open position, so that the principal exchanger (7, 42) is passed through by at least some of the airflow.

24. System according to one of the previous claims, **characterised in that** it has a pre-assembled module comprising said principal exchanger (7, 42), said evaporator (45), at least one air conduit, and means of distributing and/or mixing the air.

25. System according to claim 24, **characterised in that** the pre-assembled module comprises said cooling compressor (41) and/or the expansion valve (44), and/or an electric pump and/or a bottle of refrigerant (43, 77).

26. System according to claim 25, **characterised in that** the pre-assembled module comprises a vehicle structure element and/or a steering column and/or an airbag and/or a pedal system.

27. System according to one of claims 24 to 26, **characterised in that** the pre-assembled module comprises a motor and components for driving windscreen wipers of the vehicle, and/or a water separator for an air inlet in the passenger compartment and/or a least one air purifier filter bowl and/or at least one display element.

28. System according to one of claims 24 to 26, **characterised in that** the pre-assembled module has said thermal loop (41, 42, 43, 44, 45) and **in that** it is hermetically pre-assembled.

29. Motor vehicle, **characterised in that** it comprises a system according to one of the previous claims.

## Patentansprüche

1. Heiz-Klima-Anlage für Kraftfahrzeug, die einerseits eine Wärmeschleife umfasst, die einen Kältekompressor, einen Gaskühler, insbesondere einen Kondensator, einen Druckminderer und einen Verdampfer aufweist, und andererseits ein Heizelement, **dadurch gekennzeichnet, dass** der Gaskühler und das Heizelement zusammen in einem einzigen Tauscher (42) untergebracht sind, der in einem Heizklimagerät montiert ist, das ein Hauptmodul aufweist, welches einen Haupttauscher (7) für Luft-Wärmeträgermittel-Kältemittel bildet.

2. Anlage nach Anspruch 1, **dadurch gekennzeichnet, dass** der besagte Haupttauscher (7) Folgendes aufweist:
- mindestens eine Austauschfläche (4', 4", 37) zwischen der Luft und dem Wärmeträgermittel, die durch den Haupttauscher (7) zirkulieren;
- mindestens eine Austauschfläche (26, 27, 36) zwischen dem Wärmeträgermittel und dem Kältemittel der Hauptschleife, die durch den Haupttauscher (7) zirkulieren.

3. Anlage nach Anspruch 2, **dadurch gekennzeichnet, dass** der besagte Haupttauscher (7) aus einer Stapelung von Modulen (1, 1') besteht und Folgendes umfasst:
- ein Austauschelement (2, 3₁, 3₂) zwischen dem Wärmeträgermittel und dem Kältemittel, mit mindestens einer Fläche (37) in thermischem Kontakt mit einem Austauschelement (4) mit der Luft;
- das besagte Austauschelement mit der Luft (3, 3₁, 3₂).

4. Anlage nach Anspruch 3, **dadurch gekennzeichnet, dass** das besagte Austauschelement (2, 3₁, 3₂) zwischen dem Wärmeträgermittel und dem Kältemittel sukzessive Folgendes aufweist:
- ein erstes Element (3₁) zur Zirlulation des Wärmeträgermittels;
- ein Element (2) zur Zirkulation des Kältemittels, mit einer ersten Fläche (26), die in thermischem Kontakt mit einer ersten Fläche (36) des ersten Element (3₁) zur Zirkulation des Wärmeträgermittels ist und eine zweite Fläche (27), die in Kontakt mit einer ersten Fläche (36) eines zweiten Elementes (3₂) zur Zirkulation des Wärmeträgermittels ist;
das besagte zweite Element (3₂) zur Zirkulation des Wärmeträgermittels, und dadurch, dass das besagte Element (4) für den Austausch mit der Luft eine erste Austauschfläche (4') mit einer zweiten Fläche (37) des zweiten Elementes (3₂) zur Zirkulation des Wärmeträgermittels aufweist und eine zweite Austauschfläche (4") mit einer zweiten Fläche (37) des ersten Elementes (3₁) zur Zirkulation des Wärmeträgermittels eines angrenzenden Moduls.

5. Anlage nach Anspruch 3, **dadurch gekennzeichnet, dass** die besagten Module (1') ebenfalls mindestens eine Austauschfläche (27') zwischen der Luft und dem Kältemittel aufweisen, die durch den Haupttauscher (7) zirkulieren.

6. Anlage nach Anspruch 5, **dadurch gekennzeichnet, dass** das besagte Austauschelement (2, 3) zwischen dem Wärmeträgermittel und dem Kältemittel sukzessive Folgendes aufweist:
ein drittes Element (3) zur Zirkulation des Wärmeträgermittels, mit einer ersten Fläche in thermischem Kontakt mit einem zweiten Element (2) zur Zirkulation des Kältemittels,
das besagte zweite Element (2) zur Zirkulation des Kältemittels.

7. Anlage nach Anspruch 1, **dadurch gekennzeichnet, dass** der besagte Haupttauscher Folgendes aufweist:
mindestens eine Austauschfläche zwischen der Luft und dem Kältemittel.

8. Anlage nach einem der vorhergehenden Ansprüche, **dadurch gekennzeichnet, dass** der besagte Haupttauscher (7) einen Wärmeträgermittelsammler (11) und einen Kältemittelsammler (12) umfasst, die an gegenüberliegenden Enden des Haupttauschers (7) angeordnet sind.

9. Anlage nach Anspruch 8, **dadurch gekennzeichnet, dass** das Austauschelement (2) zwischen dem Wärmeträgermittel und dem Kältemittel mindestens ein Wärmeträgermittelkreislaufelement (31, 32, 33, 34) aufweist, um die zirkulation des Wärmeträgermittels gemäß einer Hin- und Rücklauf-Strecke zu bewirken, ausgehend von und in Richtung des Wärmeträgermittelsammlers (11) und mindestens ein Kältemittelkreislaufelement aufweist, um die Zirkulation des Kältemittels gemäß einer Hin- und Rücklauf-Strecke zu bewirken, ausgehend von und in Richtung des Kältemittelsammlers (12).

10. Anlage nach Anspruch 9, **dadurch gekennzeichnet, dass** die Kältemittel- und die Wärmeträgermittelzirkulation zumindest teilweise in Gegenströmung erfolgen.

11. Anlage nach einem der Ansprüche 8 bis 10, **dadurch gekennzeichnet, dass** der Kältemittelsammler (12) ein räumliches Element (77) aufweist, das eine Kältemittelflasche für die Wärmeschleife bildet.

12. Anlage nach Anspruch 11, **dadurch gekennzeichnet, dass** die besagte Flasche (77) aus extrudiertem Metall besteht.

13. Anlage nach Anspruch 12, **dadurch gekennzeichnet, dass** der Kältemittelsammler (12) und die Flasche (77) koextrudiert sind.

14. Anlage nach einem der vorhergehenden Ansprüche, **dadurch gekennzeichnet, dass** der besagte Tauscher ein Hilfsmodul umfasst, das einen Wärmeträgermittel-Kältemittel Hilfstauscher (8) bildet, der vom Kältemittel und von einem Kühl-Wärmeträgermittel (ERM, ESR) durchlaufen wird, und der dazu bestimmt ist, als Unterkühlungstauscher des Kältemittels und/oder als Verdampfer für eine Wärmepumpe zu dienen.

15. Anlage nach Anspruch 13, **dadurch gekennzeichnet, dass** das besagte Hilfsmodul eine Stapelung von Wärmeträgermittel-Kältemittel Austauschmodulen (5, 5') umfasst.

16. Anlage nach einem der Ansprüche 14 oder 15, **dadurch gekennzeichnet, dass** die Wärmeschleife einen ersten Verzweigungskreis aufweist, um im Heizmodus eine Wärmepumpe zu bilden, deren Kondensator der besagte Haupttauscher (7, 42) und deren Verdampfer der besagte Hilfstauscher (8) ist.

17. Anlage nach einem der Ansprüche 1 bis 13, **dadurch gekennzeichnet, dass** die Wärmeschleife einen zusätzlichen Verdampfer (55) für einen Betrieb im Heizmodus aufweist und einen zweiten Verzweigungskreis, um im Heizmodus eine Wärmepumpe zu bilden, deren Kondensator der besagte Haupttauscher (7, 42) und deren Verdampfer ein zusätzlicher Verdampfer (55) ist.

18. Anlage nach einem der vorhergehenden Ansprüche, **dadurch gekennzeichnet, dass** die Wärmeschleife einen dritten Verzweigungskreis aufweist, um in einem thermischen Heizmodus eine Heizschleife zu bilden, die den Kompressor (41) und den Haupttauscher (7, 42) umfasst, dessen Kältemittelaustritt an den Eingang des Kompressors (41) gekoppelt ist.

19. Anlage nach Anspruch 18, **dadurch gekennzeichnet, dass** sie einen Druckminderer umfasst, der unter dem Haupttauscher (7, 42) angeordnet ist.

20. Anlage nach einem der vorhergehenden Ansprüche, **dadurch gekennzeichnet, dass** die Wärmeschleife eine Versorgungsvorrichtung umfasst, um den Haupttauscher entweder ausgehend vom Kühlwasser (ERM) oder ausgehend vom unterkühlten Wasser (ESR) zu versorgen.

21. Anlage nach Anspruch 20, **dadurch gekennzeichnet, dass** sie Folgendes aufweist:
einen Klimamodus, in dem Kältemittel und unterkühlte Wasser (ESR) durch den Haupttauscher fließen,
einen Heizmodus, in dem Kühlwasser (ERM) durch den Haupttauscher fließt.

22. Anlage nach Anspruch 21, **dadurch gekennzeichnet, dass** sie eine Mischklappe (49) aufweist, die sich im Klimamodus in einer Schließposition befindet, in welcher der Haupttauscher (7, 42) vom Luftstrom abgeschottet ist.

23. Anlage nach Anspruch 22, **dadurch gekennzeichnet, dass** sie einen Antibeschlagmodus aufweist, in dem der Klimamodus aktiviert ist, und in dem sich die Mischklappe (49) zumindest teilweise in einer Öffnungsposition befindet, so dass zumindest ein Teil des Luftstroms durch den Haupttauscher (7, 42) fließt.

24. Anlage nach einem der vorhergehenden Ansprüche, **dadurch gekennzeichnet, dass** sie ein vormontiertes Modul aufweist, das den besagten Haupttauscher (7, 42), den besagten Verdampfer (45), mindestens einen Luftkanal sowie Mittel zur Verteilung und/oder Mischung der Luft umfasst.

25. Anlage nach Anspruch 24, **dadurch gekennzeichnet, dass** das vormontierte Modul den besagten Kältekompressor (41) und/oder den Druckminderer (44) und/oder eine elektrische Pumpe und/oder eine Kältemittelflasche (43, 77) umfasst.

26. Anlage nach Anspruch 25, **dadurch gekennzeichnet, dass** das vormontierte Modul ein Fahrzeugstrukturelement und/oder eine Lenksäule und/oder einen Luftsack und/oder eine Pedaleinheit umfasst.

27. Anlage nach einem der Ansprüche 24 bis 26, **dadurch gekennzeichnet, dass** das vormontierte Modul einen Motor und Antriebsorgane für die Scheibenwischer des Fahrzeugs, und/oder einen Wasserabscheider für einen Lufteintritt in die Fahrgastzelle, und/oder mindestens ein Luftreinigungsfiltergehäuse, und/oder mindestens ein Anzeigeelement umfasst.

28. Anlage nach einem der Ansprüche 24 bis 26, **dadurch gekennzeichnet, dass** das vormontierte Modul die besagte Wärmeschleife (41, 42, 43, 44, 45) aufweist und **dadurch**, dass diese in hermetischer Weise vormontiert wird.

29. Kraftfahrzeug, **dadurch gekennzeichnet, dass** es eine Anlage nach einem der vorhergehenden Ansprüche umfasst.
